# EUROPEAN PATENT SPECIFICATION

(11) **EP 3 206 500 B1**
(45) Date of publication and mention of the grant of the patent: **25.11.2020**
(21) Application number: 15778945.4
(22) Date of filing: 12.10.2015
(51) Int. Cl.: A21D 13/00

(54) **MANUFACTURING OF A PIZZA COMPRISING A TOPPING AND REDUCED SODIUM CONTENT**
HERSTELLUNG EINER PIZZA MIT BELAG UND REDUZIERTEM SODIUMGEHALT
LA FABRICATION D'UNE PIZZA COMPRENANT UNE GARNITURE ET UNE TENEUR RÉDUITE EN SODIUM

(30) Priority: 17.10.2014 US 201462065063 P
(43) Date of publication of application: 23.08.2017
(73) Proprietor: Société des Produits Nestlé S.A., 1800 Vevey (CH)
(72) Inventor: FORNY, Laurent, CH-1006 Lausanne (CH); LI, Jian, Chagrin Falls, Ohio 44022 (US); DUBOIS, Cédric, CH-1175 Lavigny (CH); DUPAS-LANGLET, Marina, CH-1350 Orbe (CH); JUBLOT, Lionel, CH-1072 Forel (CH)
(74) Representative: Couzens, Patrick John
(86) International application number: PCT/EP2015/073574
(87) International publication number: WO 2016/058996

(56) References cited:
- WO-A1-2012/033399
- US-A1- 2008 089 978
- US-B1- 7 998 512
- EVA MUELLER ET AL: "Applicability of salt reduction strategies in pizza crust", FOOD CHEMISTRY, vol. 192, 17 July 2015 (2015-07-17), pages 1116-1123, XP055237240, NL ISSN: 0308-8146, DOI: 10.1016/j.foodchem.2015.07.066
- M.GUILLOUX ET AL.: "Impact of Salt Granulometry and method of incorporation of salt on the salty and texture perception of model pizza dough", JOURNAL OF TEXTURE STUDIES, vol. 44, 1 July 2012 (2012-07-01), pages 397-408, XP002752379,
- Katharina Anne Konitzer: "Untersuchungen zur Salzwahrnehmung in Brot und Textur- Modellsystemen - Ein Beitrag zur Kochsalzreduktion in Lebensmitteln", , 21 July 2014 (2014-07-21), pages 1-226, XP055223664, Retrieved from the Internet: URL:https://mediatum.ub.tum.de/doc/1200694 /1200694.pdf [retrieved on 2015-10-26]
- BUSCH J L H C ET AL: "Sodium reduction: Optimizing product composition and structure towards increasing saltiness perception", TRENDS IN FOOD SCIENCE AND TECHNOLOGY, ELSEVIER SCIENCE PUBLISHERS, GB, vol. 29, no. 1, 7 September 2012 (2012-09-07), pages 21-34, XP028975101, ISSN: 0924-2244, DOI: 10.1016/J.TIFS.2012.08.005
- LYNCH E J ET AL: "Fundamental studies on the reduction of salt on dough and bread characteristics", FOOD RESEARCH INTERNATIONAL, ELSEVIER APPLIED SCIENCE, BARKING, GB, vol. 42, no. 7, 1 August 2009 (2009-08-01) , pages 885-891, XP026132002, ISSN: 0963-9969, DOI: 10.1016/J.FOODRES.2009.03.014 [retrieved on 2009-04-05]

## Description

### Field of the Invention

The present invention relates to a pizza product. In particular the invention relates to a product comprising dough and a topping wherein the pizza product has an exposed dough surface having a coating comprising sodium chloride. The process of the invention for manufacturing the pizza is defined by the apended claims

### Background of the Invention

Sodium intake by consumers has been steadily increasing up to a point much higher than recommended by health authorities. The high intake of sodium has often been related to high blood pressure, which leads to many cardiovascular diseases, and also has been related to renal disease, stomach cancer, bone demineralization, and other conditions.

Considerable efforts have been made to reduce sodium in processed foods (M. Guilloux et al. (2012) Journal of Texture Studies vol. 44, 397 - 408). Existing approaches for reducing sodium include controlling the total level of salt, using salt substitutes, and/or using flavour enhancers. However, reducing sodium has been a challenge because these existing approaches affect not only saltiness, but also flavour and texture. For example, reducing sodium in foods usually negatively impacts taste because sodium, in particular sodium chloride, provides basic flavour by itself and also enhances other flavours present in the food. Typical quality deteriorations related with the existing sodium reduction approaches are insufficient saltiness, off flavor and taste, alteration of appearance and inferior texture. Of course, flavour and texture are extremely important factors in the decision whether to consume nutritious foods or not and the consumer enjoyment of nutritious foods.

An object of the present invention is to improve the state of the art and to provide an improved solution to overcome at least some of the inconveniences described above. As used in this specification, the words "comprises", "comprising", and similar words, are not to be interpreted in an exclusive or exhaustive sense. In other words, they are intended to mean "including, but not limited to". The object of the present invention is achieved by the subject matter of the independent claims. The dependent claims further develop the idea of the present invention.

The invention relates to a process for manufacturing a pizza product comprising the steps of forming a dough; combining the dough with a topping selected from the group consisting of cheese, meat, vegetables and combinations of these; and applying a coating comprising sodium chloride to an exposed dough surface wherein at least 30 wt.% of the total sodium chloride in the coating and dough is present in the coating.

It has been surprisingly found by the inventors that applying a coating comprising sodium chloride to an exposed surface of a pizza product comprising dough and a topping increases the saltiness perception to the extent that such products to be formulated with a reduced overall amount of salt. For example, a savoury turnover not part of the invention could be reformulated with only 80 % of the original sodium chloride content when part of the sodium chloride was coated onto the outer dough surface of the turnover. The savoury turnover with sodium chloride coated onto the outer dough surface was found to taste as salty as the original higher sodium chloride-content turnover, with no negative effect on dough texture.

### Detailed Description of the invention

Consequently the present invention relates to a process for manufacturing a pizza as defined by the appended claims comprising dough and a topping selected from the group consisting of cheese, meat, vegetables and combinations of these, wherein the bakery product has an exposed dough surface having a coating comprising sodium chloride, and wherein at least 30 wt.% of the total sodium chloride in the coating and dough is present in the coating. The term "exposed dough surface" in this specification refers to an external dough surface of the bakery product which can be readily recognised as such, for example it is not covered by another major component. An exposed dough surface would include surfaces with a minor coating such as an egg wash. The term dough refers to uncooked dough, partially cooked dough or cooked dough. Uncooked dough is a thick malleable mixture of a starch-containing material and a liquid. The starch-containing material may be selected from the group consisting of wheat flour, maize starch, cornmeal, buckwheat flour, millet flour, amaranth flour, quinoa flour, potato starch, sweet potato flour, tapioca starch, rice starch, rice flour, sorghum flour, bean flour, pea flour, pea starch, soy flour, chickpea flour, cowpea flour, lentil flour, bambara bean flour, lupin flour, chestnut flour and combinations of these. The dough may be gluten free. Cooked dough may be for example bread or pastry.

By being applied to an exposed dough surface of the pizza the coating comprising sodium chloride immediately comes into contact with saliva and or the tongue of the consumer when the pizza is eaten. This provides a stronger salty response than having the same amount of salt within the product matrix, where other components may interfere with the saltiness perception, and much of the salty tastant may be swallowed without reaching salt taste receptors in the mouth. Humans have added common salt (sodium chloride) to their food for thousands of years and have grown accustomed to its taste. As a result, the most desirable saltiness profile is that obtained with sodium chloride. It is therefore an advantage that the method according to the invention can provide a sodium chloride saltiness profile, while allowing an overall reduction in sodium chloride in the product to be made. The proportion of the total sodium chloride in the coating and dough which is present in the coating needs to be above a threshold level before a noticeable effect on saltiness perception is achieved, for example an effect which would enable an overall reduction in sodium chloride content. In the pizza of the invention at least 30 wt.% of the total sodium chloride in the coating and dough should present in the coating, for example at least 40 wt.% of the total sodium chloride in the coating and dough may be present in the coating, for further example at least 50 wt.% of the total sodium chloride in the coating and dough may present in the coating. At least 20 wt.% of the total sodium chloride in the pizza of the invention may be present in the coating, for example at least 30 wt.%, for further example at least 40 wt.%.

Sodium chloride may only be present in the coating, but in this case, a non-sodium chloride salty tastant should be added to the product otherwise the sodium chloride in the coating would give a strong initial salty taste, fading to a rather bland taste as the rest of the bakery product was broken down in the mouth. Salt is used in most bread dough recipes to control the rate of fermentation and to give flavour. The presence of salt in a yeast-leavened dough inhibits fermentation which, in a traditional wheat flour dough strengthens the developing gluten. This results in a bread with a stable crumb, a long shelf-life and more taste than breads without salt. It is therefore beneficial to incorporate some sodium chloride in fermented dough. The dough in the bakery product of the invention may be a fermented dough and between 10 and 70 wt.% of the total sodium chloride in the coating and dough may be present in the dough, for example between 20 and 60 wt.% of the total sodium chloride in the coating and dough may be present in the dough, for further example between 30 and 50 wt.% of the total sodium chloride in the coating and dough may be present in the dough.

The greater the proportion of the external surface area which has a coating comprising sodium chloride, the more likely the sodium chloride is to come into direct contact with taste receptors in the mouth. At least 30 % of the total external dough surface area of the pizza of the invention has a coating comprising sodium chloride, for example at least 50 % of the total external dough surface area of the bakery product of the invention may have a coating comprising sodium chloride.

The method according to the invention allows the total sodium chloride in the product formulation to be decreased. The pizza of the invention contains less than 750 mg sodium chloride per 100 g, for further example the product of the invention may contain less than 400 mg sodium chloride per 100 g. Once added to the pizza the sodium chloride may not be present as sodium chloride as such, for example it may be dissolved in water, with sodium and chloride ions being independent, however it should be understood in the current application that the amount of sodium chloride in the pizza refers to the amount originally added in that form.

Sodium chloride may not be the only source of sodium in a product, for example sodium bicarbonate (baking soda) may be added as a leavening agent. The bakery product of the invention may have a sodium level of below 600 mg per 100 g, for example it may have a sodium level below 300 mg per 100 g, for further example below 140 mg of sodium per 100 g. The U.S. Food and Drug Administration define meals and main dishes to be "low in sodium" if they contain 140 mg or less of sodium per 100g.

The product of the invention comprises a topping, the product is a pizza The pizza produced by the claimed process comprises a topping, as slices of these products are almost always placed in the mouth oriented with the topping uppermost. This orientation allows a coating applied to the base of the product (e.g. the pizza base) to rapidly come in contact with the tongue of the consumer, providing a strong initial salty sensation from the sodium chloride comprised in the coating. The process of the invention is for the manufacture of a pizza and the coating is on the base of the pizza. A pizza made according to the method of the invention may have a sodium chloride content in the dough of below 500 mg per 100 g, for example below 400 mg per 100 g.

The coating of the product of the invention may further comprise an edible gum. A gum will help the coating adhere to the exposed dough surface. The gum may be selected from the group consisting of carrageenan, alginate, gellan gum, pectin, maltodextrin, xanthan gum, cellulose derivatives and combinations of these.

The present invention is defined by the appended claims and pertains to a process for manufacturing a bakery product comprising the steps of forming a dough; combining the dough with a topping selected from the group consisting of cheese, meat, vegetables and combinations of these; and applying a coating comprising sodium chloride to an exposed dough surface wherein at least 30 wt.% of the total sodium chloride in the coating and dough is present in the coating. The coating may be applied to the dough when the dough is uncooked, partially cooked or fully cooked. The coating may be applied before or after the topping is applied. If the coating is applied before the topping is applied then it should be applied, at least in part, to a surface which will remain exposed in the final product.

The coating applied in the process of the invention may be a powder composition comprising sodium chloride. For example, dough may be placed onto a surface spread with the powder composition, either before or after the dough is shaped. As further examples, the dough may be sprayed with a dry spray of powder, or the dough may pass into or over a fluidized bed of the powder composition. In the case of uncooked dough, the powder will usually adhere to the dough unaided, but in the case of cooked dough it may be necessary to apply a sticky substance such as an edible gum to the cooked dough before applying the powder composition.

The coating applied in the process of the invention may be a dispersion of sodium chloride in oil, or the coating may be an aqueous solution comprising sodium chloride. Such a solution may be sprayed onto the dough. The aqueous solution may further comprise an edible gum. The coating may be applied by any of the methods known in the art, for example the coating may be applied by a method selected from the group consisting of spraying, dipping, contacting (including pressing) and brushing. The product manufactured by the process of the invention is a pizza

### Examples

### Example 1: Salt reduction in pizza

The effect on saltiness perception of spraying a brine solution onto the base of a pizza was examined.

The reference was a pilot plant scale recipe for a "rising crust" pizza. The pizza base was made from a 600 g of yeast-leavened dough which contained 6.26 g sodium chloride. For the comparison product, the sodium chloride in the dough was reduced to 38 wt.% of the reference level (2.37 g sodium chloride in 600 g uncooked dough) and a further 2.0 g of sodium chloride was sprayed onto the underside of the pizza base as a brine solution after the dough was shaped. This gave a total sodium chloride content in the coated base of 4.37 g which is 70 wt.% of sodium chloride content of the reference pizza base. Despite containing 30 wt.% less salt than the reference, the coated pizza base was found to taste much saltier than the reference when baked.

### Example 2: Salt reduction in a savoury turnover

The effect on saltiness perception of applying a coating of powdered salt onto the external dough surface of a savoury turnover was examined.

| | Sample | Salt |
|---|---|---|
| A | Reference | 100% 100% in dough |
| B | Negative control | 80% 80% in dough |
| C | Salt coated | 80% 30% in coating |

The reference was a pilot plant scale recipe for a ham and cheese filled sandwich. The dough casing was made from 90.0 g of dough (50.4 g top layer, 39.6 g bottom layer) which contained 1120 mg sodium chloride. During the rolling out of the top dough layer, a light layer of dusting flour was applied. A filling was then placed on the bottom layer, before the top layer was applied (flour on exterior) and the sandwich was frozen.

For the negative control (B), the sodium chloride in the dough was reduced to 80 wt.% of the reference level (896 mg sodium chloride in 90.0 g uncooked dough) with no other changes. For sample C, the sodium chloride in the dough was reduced to 50 wt.% (560 mg sodium chloride in 90.0 g uncooked dough) with an additional 30 wt.% of sodium chloride (336 mg sodium chloride) added to the top dough layer together with the dusting flour. Together with the flour this adhered to the dough and formed a coating. 37.5 wt.% of the total sodium chloride content of the coating and dough was present in the coating.

After baking, the sandwiches were assessed by a trained sensory panel. Eleven assessors convened during glossary development session to discuss and agree upon a common language to fully describe the samples included in the test. Samples were evaluated using a 15-point scale where 0=none and 15=extreme. Panelists evaluated each product 2 times according to a randomized balanced block design for serving position. This provides a dataset sufficient for statistical analysis.

A summary of the sensory results compared to the reference are presented in the table below.

| | Sample | Salt | Saltiness | Texture |
|---|---|---|---|---|
| B | Negative control | 80% 80% in dough | Overall saltiness and salt persistence were the lowest. | Similar texture to reference |
| C | Salt coated | 80% 30% in coating | Similar saltiness to reference | Similar texture to reference |

It can be seen that the overall saltiness and salt persistence of the negative control sample (B) (20 wt.% salt reduction) was lower than the reference, showing that a simple reduction of salt from the reference recipe would have a negative impact on saltiness perception. However, applying a coating comprising sodium chloride to an exposed dough surface allowed an overall salt reduction of 20 wt.% without detrimentally affecting the saltiness perception or texture.

## Claims

1. Process for manufacturing a pizza comprising the steps of forming a dough; combining the dough with a topping selected from the group consisting of cheese, meat, vegetables and combinations of these; and applying a coating comprising sodium chloride to an exposed dough surface on the base of the pizza wherein at least 30 wt.% of the total sodium chloride in the coating and dough is present in the coating wherein the coating
a. is a powder composition comprising sodium chloride; or
b. comprises a dispersion of sodium chloride in oil; or
c. is an aqueous solution comprising sodium chloride;
and wherein if the coating is applied before the topping is applied then it should be applied, at least in part, to a surface which will remain exposed in the final product, and wherein at least 30 % of the total external dough surface area of the pizza has a coating comprising sodium chloride, and wherein the pizza contains less than 750 mg sodium chloride per 100 g.

2. A process according to claim 1 wherein the aqueous solution further comprises an edible gum.

3. A process according to claim 1 or claim 2 wherein the coating is applied by a method selected from the group consisting of spraying, dipping, contacting and brushing.

## Patentansprüche

1. Verfahren zur Herstellung einer Pizza, umfassend die Schritte des Bildens eines Teigs; Kombinieren des Teigs mit einem Belag ausgewählt aus der Gruppe bestehend aus Käse, Fleisch, Gemüse und Kombinationen von diesen; und Aufbringen einer Natriumchlorid umfassenden Beschichtung auf eine freiliegende Teigfläche auf dem Boden der Pizza, wobei mindestens 30 Gew.-% des gesamten Natriumchlorids in der Beschichtung und dem Teig in der Beschichtung vorhanden sind, wobei die Beschichtung
a. eine Pulverzusammensetzung ist, die Natriumchlorid umfasst; oder
b. eine Dispersion von Natriumchlorid in Öl umfasst; oder
c. eine wässrige Lösung ist, die Natriumchlorid umfasst;
und wobei, wenn die Beschichtung vor dem Aufbringen des Belags aufgebracht wird, dann sollte sie zumindest teilweise auf eine Oberfläche aufgebracht werden, die in dem fertigen Produkt freiliegend bleibt, und wobei mindestens 30 % der gesamten äußeren Teigfläche der Pizza eine Beschichtung umfassend Natriumchlorid aufweist und wobei die Pizza weniger als 750 mg Natriumchlorid pro 100 g enthält.

2. Verfahren nach Anspruch 1, wobei die wässrige Lösung ferner ein essbares Gummi umfasst.

3. Verfahren nach Anspruch 1 oder Anspruch 2, wobei die Beschichtung durch ein Verfahren ausgewählt aus der Gruppe bestehend aus Sprühen, Tauchen, Kontaktieren und Bürsten aufgetragen wird.

## Revendications

1. Procédé de fabrication d'une pizza comprenant les étapes consistant à former une pâte ; combiner la pâte avec une garniture choisie dans le groupe constitué de fromage, viande, légumes et combinaisons de ceux-ci ; et appliquer un revêtement comprenant du chlorure de sodium sur une surface de pâte exposée sur la base de la pizza dans lequel au moins 30 % en poids du chlorure de sodium total dans le revêtement et la pâte est présent dans le revêtement dans lequel le revêtement
a. est une composition en poudre comprenant du chlorure de sodium ; ou
b. comprend une dispersion de chlorure de sodium dans de l'huile ; ou
c. est une solution aqueuse comprenant du chlorure de sodium ;
et dans lequel si le revêtement est appliqué avant que la garniture ne soit appliquée alors il doit être appliqué, au moins en partie, sur une surface qui restera exposée dans le produit final, et dans lequel au moins 30 % de la superficie externe totale de pâte de la pizza a un revêtement comprenant du chlorure de sodium, et dans lequel la pizza contient moins de 750 mg de chlorure de sodium pour 100 g.

2. Procédé selon la revendication 1, dans lequel la solution aqueuse comprend en outre une gomme comestible.

3. Procédé selon la revendication 1 ou la revendication 2 dans lequel le revêtement est appliqué par un procédé choisi dans le groupe constitué de pulvérisation, immersion, mise en contact et brossage.
